# EUROPEAN PATENT SPECIFICATION

(11) **EP 2 837 546 B1**
(45) Date of publication and mention of the grant of the patent: **13.03.2019**
(21) Application number: 13775636.7
(22) Date of filing: 09.04.2013
(51) Int. Cl.: B62D 6/00, B62D 5/04, B62D 101/00, B62D 119/00

(54) **STEERING ASSIST DEVICE**
LENKHILFEVORRICHTUNG
DISPOSITIF DE DIRECTION ASSISTÉE

(30) Priority: 12.04.2012 JP 2012091381
(43) Date of publication of application: 18.02.2015
(73) Proprietor: Mitsubishi Jidosha Kogyo Kabushiki Kaisha, Tokyo 108-8410 (JP)
(72) Inventor: TAKEDA, Atsushi, Tokyo 108-8410 (JP); OHI, Hiroshi, Tokyo 108-8410 (JP)
(74) Representative: Vossius & Partner Patentanwälte Rechtsanwälte mbB
(86) International application number: PCT/JP2013/060709
(87) International publication number: WO 2013/154101

(56) References cited:
- EP-A2- 0 282 894
- DE-A1-102008 056 471
- JP-A- H0 318 635
- JP-A- H07 208 224
- JP-A- H10 236 323
- JP-A- 2001 253 357
- JP-A- 2008 254 491
- JP-A- 2008 273 466
- JP-A- 2009 078 741
- US-A1- 2004 148 075
- US-A1- 2007 043 490

## Description

### [Technical Field]

This invention relates to a steering assist apparatus which assists the steering force of a steering wheel, for example, by an electric motor.

### [Background Art]

In recent years, vehicles adopting an electric power steering device in order to cut down emissions of carbon dioxide have come into view. At the same time, knowledge has been spread as to technologies for arbitrarily controlling the generated voltage of a vehicle generator (alternator) driven by an engine to keep the generated voltage to a minimum required level, thereby improving fuel economy and reducing emissions of carbon dioxide. An electric motor of the electric power steering device is supplied with electric power from a vehicle-mounted battery, and the vehicle-mounted battery stores mainly the generated power of the alternator.

The electric motor is desired to be as small in size as possible for weight reduction and cost reduction. The small electric motor, however, maybe insufficient in output if the battery voltage (the generated voltage of the alternator), the source of the output, is low. As a result, the small electric motor may fail to provide a desired steering assist force. When the generated voltage of the alternator is to be arbitrarily controlled, the generated voltage is lowered to minimize the load on the alternator. By so doing, the amount of work by the engine for the power generation of the alternator can be decreased to reduce emissions of carbon dioxide.

That is, in order to obtain the desired steering assist force reliably by the electric motor, it is desired that the battery voltage (the generated voltage of the alternator) be high. In order to restrict the generated voltage to the minimal required level, improve the fuel economy and reduce emissions of carbon dioxide, on the other hand, it is desirable to maintain the generated voltage of the alternator in as low a state as possible . Currently, therefore, there should be a contradiction between a technology required of the electric motor of the electric power steering device and a technology for arbitrarily controlling the generated voltage of the alternator to cut down emissions of carbon dioxide.

A technology is known which increases the output voltage of the alternator when the steering torque of the steering wheel reaches a predetermined value or higher (see Patent Document 1) . By applying the technology of Patent Document 1, it becomes possible to increase the generated voltage of the alternator at the time of steering, and avoid the insufficiency of the steering assist force even when the electric motor is downsized.

On an occasion such as when the steering wheel is steered in the stationary state of the vehicle, however, a great steering torque occurs instantaneously. In this case, even if the technology of Patent Document 1 is used, the output voltage of the alternator increases after the occurrence of the steering torque. At the start of steering, the steering assist force inevitably remains insufficient.

### [Prior Art Documents]

### [Patent Documents]

[Patent Document 1] JP-A-6-64550

US 2004/148075 A1 discloses an electrical system for increasing the amount of voltage available to an electric power steering motor under high demand conditions. The system comprises a vehicle speed sensor that ascertains the speed of the vehicle, a steering wheel sensor that ascertains the rotational speed of the vehicle steering wheel, and a steering voltage controller that receives the signals provided by the vehicle speed sensor and the steering wheel sensor and processes these input signals to increase the voltage furnished to the power steering system by causing at least one component that consumes electrical power in the vehicle to reduce power consumption, or by causing a component that produces electrical power to increase power output, or by a combination of reducing power consumption and increasing power production. US 2004/148075 A1 is considered the closest prior art document and discloses the following features of claim 1; A steering assist apparatus, comprising: an assist actuator for generating performance for assisting a steering force of a steering wheel; a vehicle-mounted battery for supplying electric power to the assist actuator; an alternator for charging the vehicle-mounted battery; a steering state detection unit for detecting a steering state of the steering wheel; a vehicle speed detection unit for detecting a vehicle speed of a vehicle; and a voltage control unit for controlling an output voltage of the alternator based on detection information of each of the steering state detection unit and the vehicle speed detection unit, wherein the voltage control unit controls the output voltage of the alternator, when a stopping state of the vehicle is detected based on the detection information of the vehicle speed detection unit , in response to the steering state of the steering wheel detected by the steering state detection unit before the vehicle stops; and authorizes control for increasing the output voltage of the alternator when it is detected based on the detection information of the vehicle speed detection unit that the vehicle is running at a predetermined vehicle speed or lower, and when it is detected by the steering state detection unit that the steering wheel has been steered in a predetermined state.

US 2004/148075 A1 is considered the closest prior art document and discloses the following features of claim 2; A steering assist apparatus, comprising: an assist actuator for generating performance for assisting a steering force of a steering wheel; a vehicle-mounted battery for supplying electric power to the assist actuator; an alternator for charging the vehicle-mounted battery; a steering state detection unit for detecting a steering state of the steering wheel; a vehicle speed detection unit for detecting a vehicle speed of a vehicle; and a voltage control unit for controlling an output voltage of the alternator based on detection information of each of the steering state detection unit and the vehicle speed detection unit, wherein the voltage control unit controls the output voltage of the alternator, when a stopping state of the vehicle is detected based on the detection information of the vehicle speed detection unit , in response to the steering state of the steering wheel detected by the steering state detection unit before the vehicle stops; and authorizes control for increasing the output voltage of the alternator when it is detected based on the detection information of the vehicle speed detection unit that the vehicle is running at a predetermined vehicle speed or lower, and when it is detected by the steering state detection unit that the steering wheel has been steered in a predetermined state continuously for a prescribed time.

### ▪[Summary of the Invention]

### [Problems to be solved by the invention]

The present invention has been accomplished in the light of the above circumstances. It is an object of the present invention to provide a steering assist apparatus which can keep the generated voltage of the alternator to the minimal required level to improve fuel economy, while avoiding the lack of the steering assist force at the start of steering when the vehicle is stopping.

### [Means for solving the problems]

A first aspect of the present invention, for attaining the above-mentioned object, is a steering assist apparatus comprising: an assist actuator for generating performance for assisting the steering force of a steering wheel; a vehicle-mounted battery for
supplying electric power to the assist actuator; an alternator for charging the vehicle-mounted battery; a steering state detection unit for detecting the steering state of the steering wheel; a vehicle speed detection unit for detecting the vehicle speed of a vehicle; and a voltage control unit for controlling an output voltage of the alternator based on detection information of each of the steering state detection unit and the vehicle speed detection unit, wherein the voltage control unit controls the output voltage of the alternator, when a stopping state of the vehicle is detected based on the detection information of the vehicle speed detection unit, in response to the steering state of the steering wheel detected by the steering state detection unit before the vehicle stops.

According to the first aspect, the output voltage of the alternator after stoppage of the vehicle is controlled based on the steering state before stoppage of the vehicle . By this measure, with the battery voltage being kept as low as possible, the output voltage of the alternator can be brought into an increased state when a great steering torque is expected to occur instantaneously after stoppage of the vehicle. Thus, the steering assist force can be prevented from lacking, even if a compact assist actuator is used. If the voltage is constantly set at a high level in consideration of driving of the assist actuator, the output voltage can be changed into a low state for improved fuel economy, when no steering is expected.

According to a further aspect of the present invention the voltage control unit authorizes control for increasing the output voltage of the alternator when it is detected based on the detection information of the vehicle speed detection unit that the vehicle is running at a predetermined vehicle speed or lower, and when it is detected by the steering state detection unit that the steering wheel has been steered in a predetermined state.

According to the further aspect, when the steering wheel is steered in a predetermined state while the vehicle is running at a predetermined vehicle speed or lower, it is deemed highly likely for the steering wheel to be steered in the stopping state of the vehicle, namely, to fall into a state of so-called stationary steering. In this case, control for increasing the output voltage of the alternator can be authorized.

When an increase in the output voltage is needed, therefore, the output voltage of the alternator is controlled to be increased, without delay. As a result, the output voltage of the alternator can be brought into an increased state at the start of steering when a great steering torque occurs instantaneously. Thus, the lack of the steering assist force can be avoided even if a compact assist actuator is used.

A further aspect of the present invention is the voltage control unit authorizes control for increasing the output voltage when it is detectedbased on the detection information of the vehicle speed detection unit that the vehicle is running at a predetermined vehicle speed or lower, and when it is detected by the steering state detection unit that the steering wheel has been steered in a predetermined state continuously for a prescribed time.

According to the further aspect, when, after it is detected that the vehicle is running at a predetermined vehicle speed or lower and the steering wheel has been steered in a predetermined state, such a state continues for a prescribed time, it becomes possible to bring about a state in which control for increasing the output voltage of the alternator is authorized. Hence, the output voltage of the alternator can be increased in a state where it is highly likely for the steering wheel to be steered while the vehicle is stopping.

A third optional aspect of the present invention is the steering assist apparatus according to the second aspect, wherein the voltage control unit continues for a predetermined period the state of authorizing the control for increasing the output voltage of the alternator.

According to the third aspect, the state of authorizing control for increasing the output voltage of the alternator is continued for a predetermined period. Hence, even after the conditions for authorizing control for increasing the output voltage of the alternator have not been established, namely, irrespective of the situation of steering of the steering wheel, an increase in the output voltage can be held for a predetermined period.

A fourth optional aspect of the present invention is the steering assist apparatus according to any one of the first to third aspects, wherein the voltage control unit controls the output voltage of the alternator so as to increase, when the stopping state of the vehicle is detected based on the detection information of the vehicle speed detection unit, while the state of authorizing the control for increasing the output voltage of the alternator is continuing.

According to the fourth aspect, when the vehicle stops in a state where control for increasing the output voltage of the alternator is authorized, control for increasing the output voltage of the alternator is exercised.

A fifth optional aspect of the present invention is the steering assist apparatus according to any one of the first to fourth aspects, wherein when it is detected based on the detection information of the vehicle speed detection unit that the vehicle is in a stopping state, and when it is detected by the steering state detection unit that the steering wheel has been steered in the predetermined state, the voltage control unit controls the output voltage of the alternator such that the output voltage of the alternator is increased.

According to the fifth aspect, when the steering wheel has been steered while the vehicle is stopping, the output voltage of the alternator can be increased reliably.

A further aspect of the present invention is a reverse stage detection unit for detecting that a transmission of the vehicle has been shifted to a reverse stage, wherein when it is detected by the reverse stage detection unit that shifting to the reverse stage has been performed, the voltage control unit controls the output voltage of the alternator such that the output voltage of the alternator is increased.

According to the further aspect, when shifting to the reverse stage is detected, it is assumed highly likely for the steering wheel to be steered, with the vehicle running in retreat at a low speed. On this assumption, the output voltage of the alternator can be increased before the steering wheel is steered.

A sixth optional aspect of the present invention is the steering assist apparatus according to anyone of the first to fifth aspects, wherein the assist actuator is an electric motor for assisting the steering force of the steering wheel. An electrically operated hydraulic actuator can be used as the assist actuator, and the hydraulic actuator can be electrically driven to assist the steering force.

A seventh optional aspect of the present invention is the steering assist apparatus according to any one of the first to sixth aspects, wherein the steering state detection unit is a detection unit for deriving the steering torque of the steering wheel. It is also possible to apply a unit for detecting the steering angle as the steering state detection unit. In the case of the unit for deriving the steering torque of the steering wheel, the steering torque can be found based on the running state of the vehicle, without the use of a device such as a sensor.

### [Effects of the Invention]

The steering assist apparatus of the present invention can improve fuel economy by keeping the generated voltage of the alternator to a minimum required level, while avoiding the lack of the steering assist force at the start of steering when the vehicle is stopping.

### [Brief Description of the Drawings]

[Fig. 1] is a schematic configurational view of a steering assist apparatus according to an embodiment of the present invention.
[Fig. 2] is a time chart of the control status of a not claimed steering assist apparatus.

### [Mode for Carrying Out the Invention]

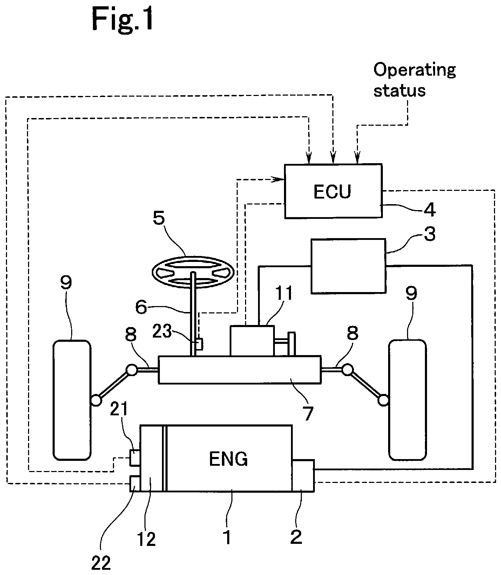

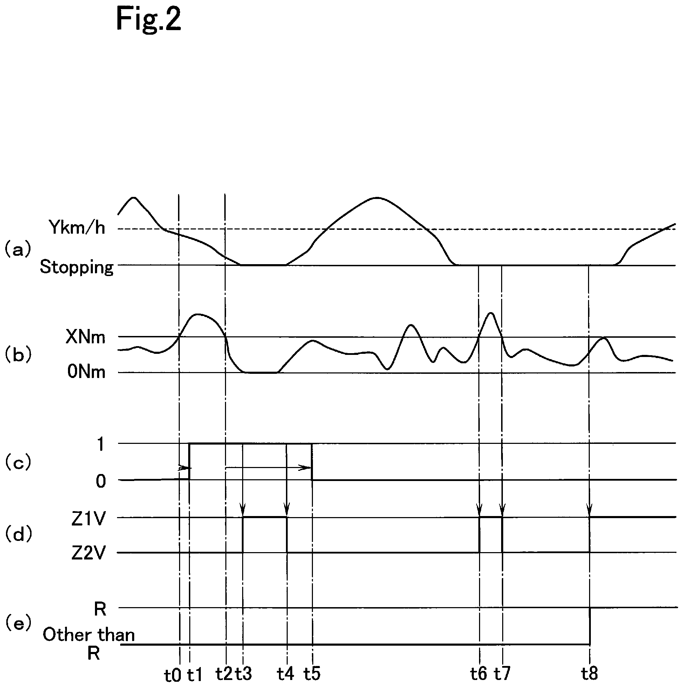

Fig. 1 shows the schematic configuration of a steering assist apparatus according to an embodiment of the present invention. Fig. 2 shows a time chart of the control status of the steering assist apparatus. Fig. 2, (a), shows changes over time in a vehicle speed. Fig. 2, (b), shows changes over time in a steering torque. Fig. 2, (c), shows changes over time in a low vehicle speed steering flag (a flag for determining that stationary steering after stopping of the vehicle is highly likely). Fig. 2, (d), shows changes over time in a voltage requirement (output voltage of an alternator) . Fig. 2, (e), shows changes in shift information on a transmission.

The schematic configuration of the steering assist apparatus will be described based on Fig. 1.

As shown in the drawing, a generator (alternator) 2 is provided for an engine 1 of a vehicle. The alternator 2 is driven by the operation of the engine 1 to generate electricity at a desired output voltage. Electric power generated by the alternator 2 is accumulated in a vehicle-mounted battery 3, and the power stored in the vehicle-mounted battery 3 is supplied to load instruments, etc. of the vehicle. The vehicle-mounted battery 3 also stores electricity upon recovery of regenerative energy during deceleration of the vehicle.

The generated voltage (power generation status) by the alternator 2 is arbitrarily controlled by the command of an ECU 4 based on the operating status or the like of the vehicle, to restrict the generated voltage to a minimum required level, thereby improving fuel economy. That is, the alternator 2 has its power generation controlled such that its generated voltage is kept down to decrease the amount of work of (load on) the engine 1, during acceleration or constant speed running or idling operation of the vehicle.

The driver's seat is provided with a steering wheel 5 and, when the steering wheel 5 is operated, an operating force is transmitted to a steering gear mechanism 7 via a steering shaft 6. Upon transmission of the operating force of the steering wheel 5 to the steering gear mechanism 7, turn wheels 9 are steered via tie rods 8.

The steering gear mechanism 7 is provided with an electric motor 11 as an assist actuator, and the driving force of the electric motor 11 is entered into the steering gear mechanism 7. By the driving of the electric motor 11, the steering force of the steering wheel 5 is assisted. That is, the electric motor 11 serves as the assist actuator which generates performance for assisting the steering force of the steering wheel 5. The electric motor 11 is supplied with power from the vehicle-mounted battery 3, and driven by the command of the ECU 4 to assist the steering force of the steering wheel 5.

It is also possible to apply a feature for inputting power of a hydraulic actuator (a hydraulic cylinder mechanism) to the steering gear mechanism 7. In this case, an electrically operated hydraulic motor is used as an assist actuator in order to actuate the hydraulic actuator.

The engine 1 is equipped with a transmission 12, and shift information on the transmission 12 is detected by a shift position sensor 21 (reverse stage detection unit) and inputted to the ECU 4. For example, information on shift to a reverse stage (information on R-position) is inputted to the ECU 4 by the shift position sensor 21. The ECU 4 is also fed information on the vehicle speed detected by a vehicle speed sensor 22 (vehicle speed detection unit), and information on the steering torque of the steering wheel 5 detected by a steering torque sensor 23 (steering state detection unit).

It is also possible to detect the steering wheel angle of the steering wheel 5 directly by use of a steering wheel angle sensor as a detecting portion of the steering state detection unit for detecting the steering status of the steering wheel 5.

With the above-described steering assist apparatus, the generated voltage of the alternator 2 is controlled arbitrarily to restrict the generated voltage to the minimum required level, thereby improving fuel economy and cutting down emissions of carbon dioxide. For this purpose, the generated voltage of the alternator 2 (voltage requirement of the vehicle-mounted battery 3) is maintained in a low state. At the time of steering assist, the output voltage of the alternator 2 is increased in order to ensure the driving force of the electric motor 11 adequately.

That is, when it is detected by the ECU 4 that the vehicle speed of the vehicle becomes equal to or lower than a predetermined vehicle speed (e.g. , a value of the order of 30 Km/h: Y Km/h) and the steering torque of the steering wheel 5 reaches a predetermined value (e.g., a value of the order of several Nm: X Nm), the determination is made that it is highly likely for the steering wheel 5 to be brought into a state of stationary steering during stoppage of the vehicle, and that great steering torque may develop instantaneously. Based on this determination, the output voltage of the alternator 2 is increased by the command of the ECU 4 (voltage control unit).

Such being the case, under a situation where there is a high possibility of a great steering torque occurring instantaneously (a state where the possibility is high that stationary steering of the steering wheel 5 takes place while the vehicle is stopping), the output voltage of the alternator 2 can be increased beforehand at the start of steering. Hence, when the steering wheel 5 is subjected to stationary steering during vehicle stoppage, the steering assist force is not insufficient, even if the electric motor 11 is downsized, because electric power of an adequate voltage is supplied from the vehicle-mounted battery 3.

The control status by the steering assist apparatus will be described concretely based on Fig. 2. For the numerals or symbols of the members, reference to Fig. 1 as well is requested.

As shown in Fig. 2, (a), the vehicle speed becomes Y Km/h or lower. Then, as shown in Fig. 2, (b), the steering torque of the steering wheel 5 reaches X Nm or more at time t0. At time t1 when this state has continued for a prescribed time (e.g. , 1 second), a low vehicle speed steering flag, which is a flag for determining that stationary steering after stoppage of the vehicle is highly likely, is set to 1, as shown in Fig. 2, (c), to indicate that there is a high possibility for the execution of stationary steering of the steering wheel 5 when the vehicle stops. That is, a state where output voltage increasing control for increasing the output voltage of the alternator 2 is authorized is brought about.

Even when the steering torque of the steering wheel 5 falls short of X Nm at time t2, namely, even when the conditions for setting the low vehicle speed steering flag to 1 are not fulfilled, as shown in Fig. 2, (b), the state of authorizing control for increasing the output voltage of the alternator 2 (low vehicle speed steering flag: 1) is continued for a predetermined time (e.g., several seconds), as shown in Fig. 2, (c). That is, the state of the low vehicle speed steering flag being set to 1 continues until time t5.

When stoppage of the vehicle is detected at time t3 (while the conditions for setting the low vehicle speed steering flag to 1 are being fulfilled), as shown in Fig. 2, (a), the voltage required to be charged (voltage requirement) for the vehicle-mounted battery 3 is increased from the minimum required value Z2V (e.g., 12.0 V) to Z1V (e.g., 13.5 V), as shown in Fig. 2, (d). Until time t4 when the vehicle begins to run, the voltage requirement is increased to Z1V, as shown in Fig. 2, (d).

During this period, there may be a case in which the steering wheel 5 is steered during stoppage of the vehicle to bring about a state of stationary steering, so that a great steering torque occurs instantaneously. In this case, the steering assist force of the electric motor 11, even of a small size, is not insufficient, because power of an adequate voltage is supplied from the vehicle-mounted battery 3 to the electric motor 11. Thus, with an improvement in fuel economy being contemplated (with the generated voltage being kept to the minimum required level), the electric motor 11 can be effectively used as a result of a minimum required increase in voltage to generate the steering assist force .

As shown in Fig. 2, (c), after the state of keeping the low vehicle speed steering flag to 1 continues until time t5, the low vehicle speed steering flag is brought to 0 (the conditions for keeping the low vehicle speed steering flag at 1 do not hold).

After time t5 and after the vehicle runs, the vehicle stops, as shown in Fig. 2, (a). When the steering torque of the steering wheel 5 reaches X Nm or more at time t6, as shown in Fig. 2, (b), the voltage charging requirement (voltage requirement) of the vehicle-mounted battery 3 is increased from the minimum required value Z2V (e.g., 12.0V) to Z1V (e.g., 13.5V), as shown in Fig. 2, (d). The voltage requirement is increased to Z1V until time t7 when the steering torque of the steering wheel 5 falls short of X Nm, as shown in Fig. 2, (d).

Hence, even if a great steering torque instantaneously occurs during abrupt stationary steering when the vehicle stops, power of an adequate voltage is supplied from the vehicle-mounted battery 3 to the electric motor 11, so that the steering assist force is not lacking. Consequently, the steering assist force can be obtained unerringly without a response delay.

The threshold value of the steering torque of the steering wheel 5, which is determined at time t6, is the steering torque when the vehicle is stopping. Thus, it is preferred to increase the voltage requirement, thereby bringing about a state where the steering assist force easily occurs. The threshold value determined during a period from time t1 to time t2 is that while the vehicle is running before stopping. If this value is too low, therefore, the voltage requirement is frequently increased during running. Thus, a predetermined value which does not allow such frequent increases is preferred.

Depending on the type of the vehicle, the area of use of the vehicle, or the like, the value of X Nm, the threshold value, can be changed as appropriate. As in the present case, the threshold value determined at time t6 and the threshold value determined during the period from time t1 to time t2 may be set at the same value.

When it is detected at time t8 that the shift position of the transmission 12 has been rendered the reverse stage (R-position), as shown in Fig. 2, (e), the voltage charging requirement (voltage requirement) of the vehicle-mounted battery 3 is increased from the minimum required value Z2V (e.g., 12.0V) to Z1V (e.g., 13.5V), as shown in Fig. 2, (d).

Hence, even if a great steering torque instantaneously occurs during stationary steering as a result of steering of the steering wheel 5 after shifting to the reverse stage, for example, for placing in a garage or taking out of a parking lot, power of an adequate voltage is supplied from the vehicle-mounted battery 3 to the electric motor 11. Thus, the steering assist force is not lacking. Consequently, the steering assist force can be obtained unerringly without a response delay.

When the vehicle is to be moved backward for parking in a parking space, for example, the vehicle is stopped in a predetermined posture with respect to the parking space, and an operation for shifting to the reverse stage is performed. In this state, the steering wheel 5 is instantaneously steered and, at the same time, the vehicle is moved backward and placed in the parking space. In this case, even when the steering wheel 5 is momentarily steered, the steering assist force can be obtained without a response delay, because power of an adequate voltage is supplied from the vehicle-mounted battery 3 to the electric motor 11.

When the vehicle is parked in a forwardly heading state in the parking space, on the other hand, an operation for shifting to the reverse stage is performed, if it is intended to take the vehicle out of the parking space. In this state, the steering wheel 5 is instantaneously steered and, simultaneously, the vehicle is moved backward out of the parking space. In this case as well, as in the above-mentioned situation, even when the steering wheel 5 is momentarily steered, the steering assist force can be obtained without a response delay, because power of an adequate voltage is supplied from the vehicle-mounted battery 3 to the electric motor 11.

When stationary steering is performed after shifting to the reverse stage, therefore, the steering assist force by the electric motor 11 is unerringly obtained without delay. Consequently, even if the electric motor 11 is of a small size, power of an adequate voltage is supplied from the vehicle-mounted battery 3 and, even during stationary steering after shifting to the reverse stage, there is no lack of the steering assist force.

### [Industrial Applicability]

The present invention can be utilized in the industrial field of a steering assist apparatus which assists the steering force of a steering wheel, for example, by an electric motor.

### [Explanations of Letters or Numerals]

- 1: Engine
- 2: Generator (alternator)
- 3: Vehicle-mounted battery
- 4: ECU
- 5: Steering wheel
- 6: Steering shaft
- 7: Steering gear mechanism
- 8: Tie rod
- 9: Turn wheel
- 11: Electric motor
- 12: Transmission
- 21: Shift position sensor
- 22: Vehicle speed sensor
- 23: Steering torque sensor

## Claims

1. A steering assist apparatus, comprising:
an assist actuator (11) for generating performance for assisting a steering force of a steering wheel (5);
a vehicle-mounted battery (3) for supplying electric power to the assist actuator (11);
an alternator (2) for charging the vehicle-mounted battery (3) ;
a steering state detection unit (23) for detecting a steering state of the steering wheel (5);
a vehicle speed detection unit (22) for detecting a vehicle speed of a vehicle;
a reverse stage detection unit (21) for detecting that a transmission of the vehicle has been shifted to a reverse stage, and
a voltage control unit (4) for controlling an output voltage of the alternator (2) based on detection information of each of the steering state detection unit (23) and the vehicle speed detection unit (22),
wherein the voltage control unit (4)
controls the output voltage of the alternator (2), when a stopping state of the vehicle is detected based on the detection information of the vehicle speed detection unit (22), in response to the steering state of the steering wheel (5) detected by the steering state detection unit (23) before the vehicle stops; and authorizes control for increasing the output voltage of the alternator (2) when it is detected based on the detection information of the vehicle speed detection unit (22) that the vehicle is running at a predetermined vehicle speed or lower, and when it is detected by the steering state detection unit (23) that the steering wheel (5) has been steered in a predetermined state, **characterized in that**
when it is detected by the reverse stage detection unit (21) that shifting to the reverse stage has been performed, the voltage control unit (4) controls the output voltage of the alternator (2) such that the output voltage of the alternator (2) is increased.

2. A steering assist apparatus, comprising:
an assist actuator (11) for generating performance for assisting a steering force of a steering wheel (5);
a vehicle-mounted battery (3) for supplying electric power to the assist actuator (11);
an alternator (2) for charging the vehicle-mounted battery (3) ;
a steering state detection unit (23) for detecting a steering state of the steering wheel (5);
a vehicle speed detection unit (22) for detecting a vehicle speed of a vehicle;
a reverse stage detection unit (21) for detecting that a transmission of the vehicle has been shifted to a reverse stage, and
a voltage control unit (4) for controlling an output voltage of the alternator (2) based on detection information of each of the steering state detection unit (23) and the vehicle speed detection unit (22),
wherein the voltage control unit (4)
controls the output voltage of the alternator (2), when a stopping state of the vehicle is detected based on the detection information of the vehicle speed detection unit (22), in response to the steering state of the steering wheel (5) detected by the steering state detection unit (23) before the vehicle stops; and
authorizes control for increasing the output voltage when it is detected based on the detection information of the vehicle speed detection unit (22) that the vehicle is running at a predetermined vehicle speed or lower, and when it is detected by the steering state detection unit (23) that the steering wheel (5) has been steered in a predetermined state continuously for a prescribed time,
**characterized in that**
when it is detected by the reverse stage detection unit (21) that shifting to the reverse stage has been performed, the voltage control unit (4) controls the output voltage of the alternator (2) such that the output voltage of the alternator (2) is increased.

3. The steering assist apparatus according to claim 2, wherein
the voltage control unit (4) continues for a predetermined period a state of authorizing the control for increasing the output voltage of the alternator (2).

4. The steering assist apparatus according to any one of claims 1 to 3, wherein
the voltage control unit (4) controls the output voltage of the alternator (2) so as to increase, when the stopping state of the vehicle is detected based on the detection information of the vehicle speed detection unit (22), while a state of authorizing the control for increasing the output voltage of the alternator (2) is continuing.

5. The steering assist apparatus according to any one of claims 1 to 4, wherein
when it is detected based on the detection information of the vehicle speed detection unit (22) that the vehicle is in a stopping state, and when it is detected by the steering state detection unit (23) that the steering wheel (5) has been steered in the predetermined state, the voltage control unit (4) controls the output voltage of the alternator (2) such that the output voltage of the alternator (2) is increased.

6. The steering assist apparatus according to any one of claims 1 to 5, wherein
the assist actuator (11) is an electric motor (11) for assisting the steering force of the steering wheel (5).

7. The steering assist apparatus according to any one of claims 1 to 6, wherein
the steering state detection unit (23) is a detection unit for deriving a steering torque of the steering wheel (5).

## Patentansprüche

1. Lenkunterstützungsvorrichtung mit:
einem Unterstützungsaktuator (11) zum Erzeugen einer Leistung zum Unterstützen einer Lenkkraft für ein Lenkrad (5);
einer am Fahrzeug montierten Batterie (3) zum Zuführen von elektrischer Energie zum Unterstützungsaktuator (11);
einem Generator (2) zum Aufladen der am Fahrzeug montierten Batterie (3);
einer Lenkzustandserfassungseinheit (23) zum Erfassen eines Lenkzustands des Lenkrads (5);
einer Fahrzeuggeschwindigkeitserfassungseinheit (22) zum Erfassen einer Fahrzeuggeschwindigkeit eines Fahrzeugs;
einer Rückwärtsgangstufenerfassungseinheit (21) zum Erfassen, dass ein Getriebe des Fahrzeugs in eine Rückwärtsgangstufe geschaltet worden ist; und
einer Spannungssteuereinheit (4) zum Steuern einer Ausgangsspannung des Generators (2) basierend auf Erfassungsinformation von der Lenkzustandserfassungseinheit (23) und der Fahrzeuggeschwindigkeitserfassungseinheit (22),
wobei die Spannungssteuereinheit (4),
wenn basierend auf der Erfassungsinformation der Fahrzeuggeschwindigkeitserfassungseinheit (22) ein Stoppzustand des Fahrzeugs erfasst wird, die Ausgangsspannung des Generators (2) in Antwort auf den Lenkzustand des Lenkrads (5) steuert, der durch die Lenkzustandserfassungseinheit (23) erfasst wird, bevor das Fahrzeug stoppt, und
eine Steuerung zum Erhöhen der Ausgangsspannung des Generators (2) autorisiert, wenn basierend auf der Erfassungsinformation der Fahrzeuggeschwindigkeitserfassungseinheit (22) erfasst wird, dass das Fahrzeug mit einer vorgegebenen oder einer niedrigeren Fahrzeuggeschwindigkeit fährt, und wenn durch die Lenkzustandserfassungseinheit (23) erfasst wird, dass das Lenkrad (5) in einem vorgegebenen Zustand gelenkt worden ist;
**dadurch gekennzeichnet, dass**,
wenn durch die Rückwärtsgangstufenerfassungseinheit (21) erfasst wird, dass ein Schaltvorgang in die Rückwärtsgangstufe ausgeführt worden ist, die Spannungssteuereinheit (4) die Ausgangsspannung des Generators (2) derart steuert, dass die Ausgangsspannung des Generators (2) erhöht wird.

2. Lenkunterstützungsvorrichtung mit:
einem Unterstützungsaktuator (11) zum Erzeugen einer Leistung zum Unterstützen einer Lenkkraft für ein Lenkrad (5);
einer am Fahrzeug montierten Batterie (3) zum Zuführen von elektrischer Energie zum Unterstützungsaktuator (11);
einem Generator (2) zum Aufladen der am Fahrzeug montierten Batterie (3);
einer Lenkzustandserfassungseinheit (23) zum Erfassen eines Lenkzustands des Lenkrads (5);
einer Fahrzeuggeschwindigkeitserfassungseinheit (22) zum Erfassen einer Fahrzeuggeschwindigkeit eines Fahrzeugs;
einer Rückwärtsgangstufenerfassungseinheit (21) zum Erfassen, dass ein Getriebe des Fahrzeugs in eine Rückwärtsgangstufe geschaltet worden ist; und
einer Spannungssteuereinheit (4) zum Steuern einer Ausgangsspannung des Generators (2) basierend auf Erfassungsinformation von der Lenkzustandserfassungseinheit (23) und der Fahrzeuggeschwindigkeitserfassungseinheit (22),
wobei die Spannungssteuereinheit (4),
wenn basierend auf der Erfassungsinformation der Fahrzeuggeschwindigkeitserfassungseinheit (22) ein Stoppzustand des Fahrzeugs erfasst wird, die Ausgangsspannung des Generators (2) in Antwort auf den Lenkzustand des Lenkrads (5) steuert, der durch die Lenkzustandserfassungseinheit (23) erfasst wird, bevor das Fahrzeug stoppt, und
eine Steuerung zum Erhöhen der Ausgangsspannung autorisiert, wenn basierend auf der Erfassungsinformation der Fahrzeuggeschwindigkeitserfassungseinheit (22) erfasst wird, dass das Fahrzeug mit einer vorgegebenen oder einer niedrigeren Fahrzeuggeschwindigkeit fährt, und wenn durch die Lenkzustandserfassungseinheit (23) erfasst wird, dass das Lenkrad (5) für eine vorgegebene Zeitdauer kontinuierlich in einem vorgegebenen Zustand gelenkt worden ist;
**dadurch gekennzeichnet, dass**,
wenn durch die Rückwärtsgangstufenerfassungseinheit (21) erfasst wird, dass ein Schaltvorgang in die Rückwärtsgangstufe ausgeführt worden ist, die Spannungssteuereinheit (4) die Ausgangsspannung des Generators (2) derart steuert, dass die Ausgangsspannung des Generators (2) erhöht wird.

3. Lenkunterstützungsvorrichtung nach Anspruch 2, wobei die Spannungssteuereinheit (4) einen Zustand der Autorisierung der Steuerung zum Erhöhen der Ausgangsspannung des Generators (2) für eine vorgegebene Zeitdauer aufrechterhält.

4. Lenkunterstützungsvorrichtung nach einem der Ansprüche 1 bis 3, wobei
die Spannungssteuereinheit (4) die Ausgangsspannung des Generators (2) derart steuert, dass sie erhöht wird, wenn der Stoppzustand des Fahrzeugs basierend auf der Erfassungsinformationen der Fahrzeuggeschwindigkeitserfassungseinheit (22) erfasst wird, während ein Zustand der Autorisierung der Steuerung zum Erhöhen der Ausgangsspannung des Generators (2) aufrechterhalten wird.

5. Lenkunterstützungsvorrichtung nach einem der Ansprüche 1 bis 4, wobei,
wenn basierend auf der Erfassungsinformation der Fahrzeuggeschwindigkeitserfassungseinheit (22) erfasst wird, dass sich das Fahrzeug in einem Stoppzustand befindet, und wenn durch die Lenkzustandserfassungseinheit (23) erfasst wird, dass das Lenkrad (5) in dem vorgegebenen Zustand gelenkt worden ist, die Spannungssteuereinheit (4) die Ausgangsspannung des Generators (2) derart steuert, dass die Ausgangsspannung des Generators (2) erhöht wird.

6. Lenkunterstützungsvorrichtung nach einem der Ansprüche 1 bis 5, wobei
der Unterstützungsaktuator (11) ein Elektromotor (11) zum Unterstützen der Lenkkraft für das Lenkrad (5) ist.

7. Lenkunterstützungsvorrichtung nach einem der Ansprüche 1 bis 6, wobei
die Lenkzustandserfassungseinheit (23) eine Erfassungseinheit zum Herleiten eines Lenkdrehmoments des Lenkrads (5) ist.

## Revendications

1. Appareil de direction assistée, comprenant :
un actionneur d'assistance (11) destiné à produire des performances pour assister une force de direction de volant de direction (5) ;
une batterie montée sur véhicule (3) destinée à alimenter l'actionneur d'assistance (11) en énergie électrique ;
un alternateur (2) destiné à charger la batterie montée sur véhicule (3) ;
une unité de détection d'état de braquage (23) destinée à détecter un état de braquage du volant de direction (5) ;
une unité de détection de vitesse de véhicule (22) destinée à détecter une vitesse de véhicule d'un véhicule ;
une unité de détection de marche arrière (21) destinée à détecter qu'une boîte de vitesses du véhicule est passée à une marche arrière, et
une unité de régulation de tension (4) destinée à réguler une tension de sortie de l'alternateur (2) sur la base d'informations de détection de chacune des unités de détection d'état de braquage (23) et de détection de vitesse de véhicule (22),
dans lequel l'unité de régulation de tension (4) :
régule la tension de sortie de l'alternateur (2) lorsqu'un état d'arrêt du véhicule est détecté sur la base des informations de détection de l'unité de détection de vitesse de véhicule (22), en réponse à l'état de braquage du volant de direction (5) détecté par l'unité de détection d'état de braquage (23) avant que le véhicule ne s'arrête ; et
autorise une commande d'augmentation de la tension de sortie de l'alternateur (2) lorsqu'il est détecté, sur la base des informations de détection de l'unité de détection de vitesse de véhicule (22) que le véhicule roule à une vitesse inférieure ou égale à une vitesse prédéterminée de véhicule, et lorsqu'il est détecté par l'unité de détection d'état de braquage (23) que le volant de direction (5) a été braqué dans un état prédéterminé, **caractérisé en ce que** :
lorsqu'il est détecté par l'unité de détection de marche arrière (21) qu'un passage en marche arrière a été effectué, l'unité de régulation de tension (4) régule la tension de sortie de l'alternateur (2) de manière à augmenter la tension de sortie de l'alternateur (2).

2. Appareil de direction assistée, comprenant :
un actionneur d'assistance (11) destiné à produire des performances pour assister une force de direction de volant de direction (5) ;
une batterie montée sur véhicule (3) destinée à alimenter l'actionneur d'assistance (11) en énergie électrique ;
un alternateur (2) destiné à charger la batterie montée sur véhicule (3) ;
une unité de détection d'état de braquage (23) destinée à détecter un état de braquage du volant de direction (5) ;
une unité de détection de vitesse de véhicule (22) destinée à détecter une vitesse de véhicule ;
une unité de détection de marche arrière (21) destinée à détecter qu'une boîte de vitesses du véhicule est passée à une marche arrière, et
une unité de régulation de tension (4) destinée à réguler une tension de sortie de l'alternateur (2) sur la base d'informations de détection de chacune des unités de détection d'état de braquage (23) et de détection de vitesse de véhicule (22),
dans lequel l'unité de régulation de tension (4) :
régule la tension de sortie de l'alternateur (2) lorsqu'un état d'arrêt du véhicule est détecté sur la base des informations de détection de l'unité de détection de vitesse de véhicule (22), en réponse à l'état de braquage du volant de direction (5) détecté par l'unité de détection d'état de braquage (23) avant que le véhicule ne s'arrête ; et
autorise une commande d'augmentation de la tension de sortie, lorsqu'il est détecté, sur la base des informations de détection de l'unité de détection de vitesse de véhicule (22) que le véhicule roule à une vitesse inférieure ou égale à une vitesse prédéterminée de véhicule, et lorsqu'il est détecté par l'unité de détection d'état de braquage (23) que le volant de direction (5) a été braqué dans un état prédéterminé, en continu, pendant un temps prescrit,
**caractérisé en ce que** :
lorsqu'il est détecté par l'unité de détection de marche arrière (21) qu'un passage en marche arrière a été effectué, l'unité de régulation de tension (4) régule la tension de sortie de l'alternateur (2) de manière à augmenter la tension de sortie de l'alternateur (2).

3. Appareil de direction assistée selon la revendication 2 dans lequel :
l'unité de régulation de tension (4) maintient pendant une période prédéterminée un état d'autorisation de la commande d'augmentation de la tension de sortie de l'alternateur (2).

4. Appareil de direction assistée, selon l'une quelconque des revendications 1 à 3, dans lequel :
l'unité de régulation de tension (4) régule la tension de sortie de l'alternateur (2) de manière à l'augmenter, lorsque l'état d'arrêt du véhicule est détecté sur la base des informations de détection de l'unité de détection de vitesse de véhicule (22), tandis qu'un état d'autorisation de la commande d'augmentation de la tension de sortie de l'alternateur (2) est maintenu.

5. Appareil de direction assistée, selon l'une quelconque des revendications 1 à 4, dans lequel :
lorsqu'il est détecté, sur la base des informations de détection de l'unité de détection de vitesse de véhicule (22) que le véhicule est à l'état d'arrêt, et lorsqu'il est détecté par l'unité de détection d'état de braquage (23) que le volant de direction (5) a été braqué dans l'état prédéterminé, l'unité de régulation de tension (4) régule la tension de sortie de l'alternateur (2) de manière à augmenter la tension de sortie de l'alternateur (2).

6. Appareil de direction assistée, selon l'une quelconque des revendications 1 à 5, dans lequel :
l'actionneur d'assistance (11) est un moteur électrique (11) destiné à assister la force de direction du volant de direction (5).

7. Appareil de direction assistée, selon l'une quelconque des revendications 1 à 6, dans lequel :
l'unité de détection d'état de braquage (23) est une unité de détection destinée à déterminer un couple de braquage du volant de direction (5).
